# EUROPEAN PATENT SPECIFICATION

(11) **EP 4 267 337 B1**
(45) Date of publication and mention of the grant of the patent: **17.09.2025**
(21) Application number: 21845100.3
(22) Date of filing: 22.12.2021
(51) Int. Cl.: B23K 20/12

(54) **FRICTION STIR WELDING TOOL, WELDING METHOD AND SHEET WELDING MACHINE**
REIBRÜHRSCHWEISSWERKZEUG, SCHWEISSVERFAHREN UND BLECHSCHWEISSMASCHINE
OUTIL DE SOUDAGE PAR FRICTION-MALAXAGE, PROCÉDÉ DE SOUDAGE ET MACHINE DE SOUDAGE DE FEUILLE

(30) Priority: 22.12.2020 IT 202000031952; 04.03.2021 IT 202100005096
(43) Date of publication of application: 01.11.2023
(73) Proprietor: MIWENTI S.R.L., 24062 Costa Volpino (BG) (IT)
(72) Inventor: BIANCHI, Renato, 24062 Costa Volpino, Bergamo (IT)
(74) Representative: De Lorenzo, Danilo
(86) International application number: PCT/IB2021/062166
(87) International publication number: WO 2022/137151

(56) References cited:
- EP-A1- 1 510 280
- EP-A1- 3 067 148
- EP-A2- 1 314 509
- WO-A2-2013/026573
- US-A1- 2020 338 665

## Description

The present invention generally relates to the field of welding large-sized sheets, for example for the production of ingot molds starting from sheets suitable for receiving molten metal in the industrial production process of billets, for example continuous casting.

More particularly, the present invention relates to a friction stir welding tool, to a sheet welding method and to a sheet welding machine. A friction stir welding tool according to the art is disclosed in document US 2020/338665.

It is known in the art to carry out welds between metal sheets, that is, between two flaps of one or more metal sheets.

For example, with particular reference to the steel industry, the construction of copper ingot molds involves rolling a copper panel (sheet) in such a way as to create a cylindrical cavity and a subsequent welding between two opposite flaps of the panel placed in proximity to each other, so as to completely close the only longitudinal fissure remaining from the rolling process.

Such process of welding the two flaps is carried out by means of the well-known fusion welding of the two flaps, after having carefully heated the entire piece of copper.

Disadvantageously, the known welding processes involve numerous problems. First of all, it is necessary to heat the entire copper piece, which requires high energy consumption and heating times; moreover, the aforementioned welding, performed manually, is highly dependent on the skills of the specific operator carrying out the welding, thus generating inhomogeneity both inside the single weld and between different and subsequent welds. Furthermore, precisely because of the way it is made, the weld often has internal defects which over time may lead to the failure of the welded region.

Furthermore, the welding carried out with the known techniques does not always succeed in satisfying the tolerance requirements required for the production of high-quality manufactured articles, such as, for example, ingot molds.

The object of the present invention is to eliminate the above drawbacks of the prior art methods. In particular, one of the objects of the present invention is to provide a friction stir welding tool, a sheet welding method and a sheet welding machine which are able to reduce the time required for making the welds, which require fewer resources and which are reliable and homogeneous in the result.

According to the invention, these objects are achieved by a friction stir welding tool, by a sheet welding method and by a sheet welding machine according to the appended independent claims. Preferred embodiments of the invention are defined in the dependent claims.

The features and the advantages of a friction stir welding tool, a sheet welding method and a sheet welding machine will become apparent from the description given below by way of non-limiting example, according to the accompanying figures, in which:

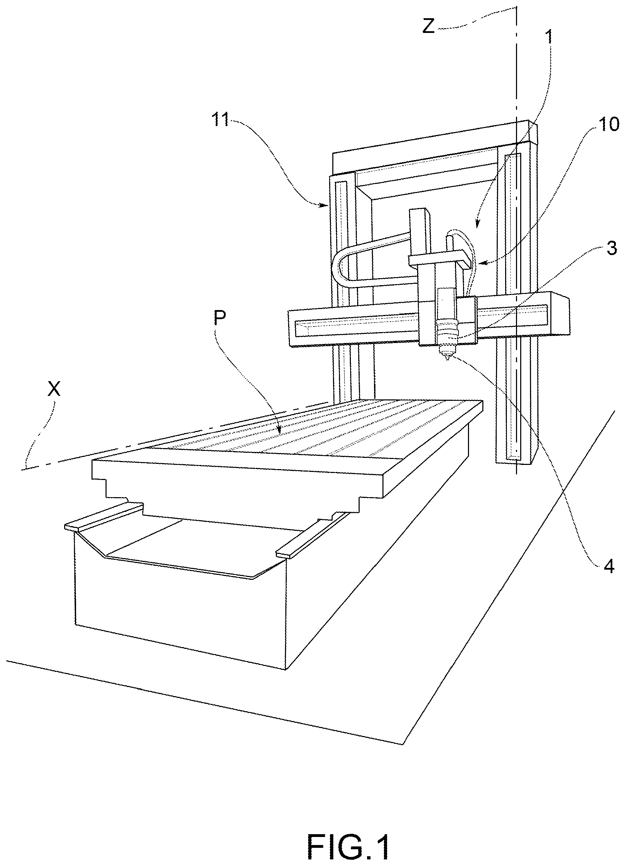

- Figure 1 shows a perspective view of a welding machine according to an embodiment of the present invention;

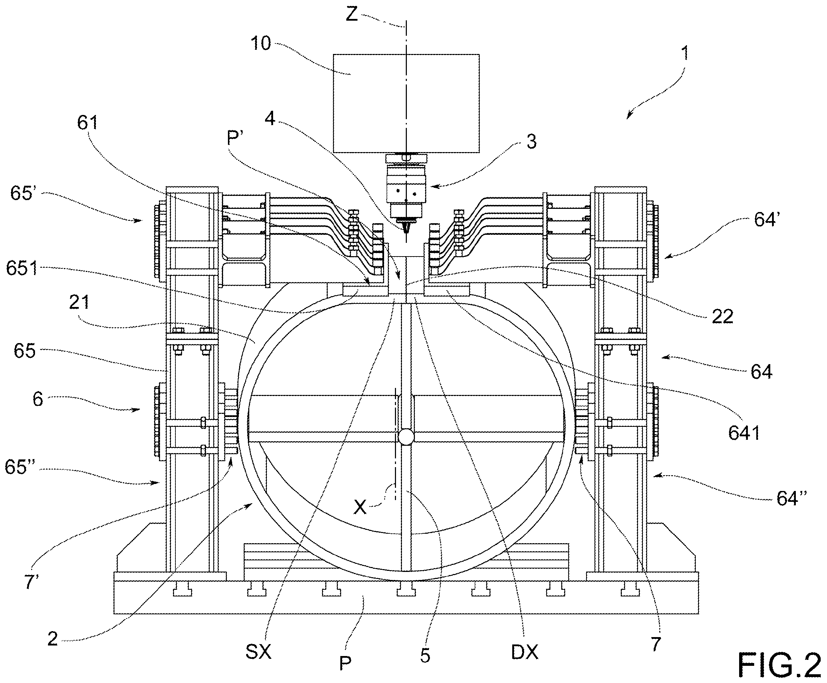

- Figure 2 shows a front view of a welding machine according to an embodiment of the present invention in a step of the welding method;
- Figure 3 shows a detail of a step of the method of manufacturing an ingot mold according to an embodiment of the present invention;
- Figure 4 shows a detail of a step of the method of manufacturing an ingot mold, subsequent to the step of Figure 3, according to an embodiment of the present invention;
- Figure 5 shows a detail of a step of the method of manufacturing an ingot mold, subsequent to the step of Figure 4, according to an embodiment of the present invention;

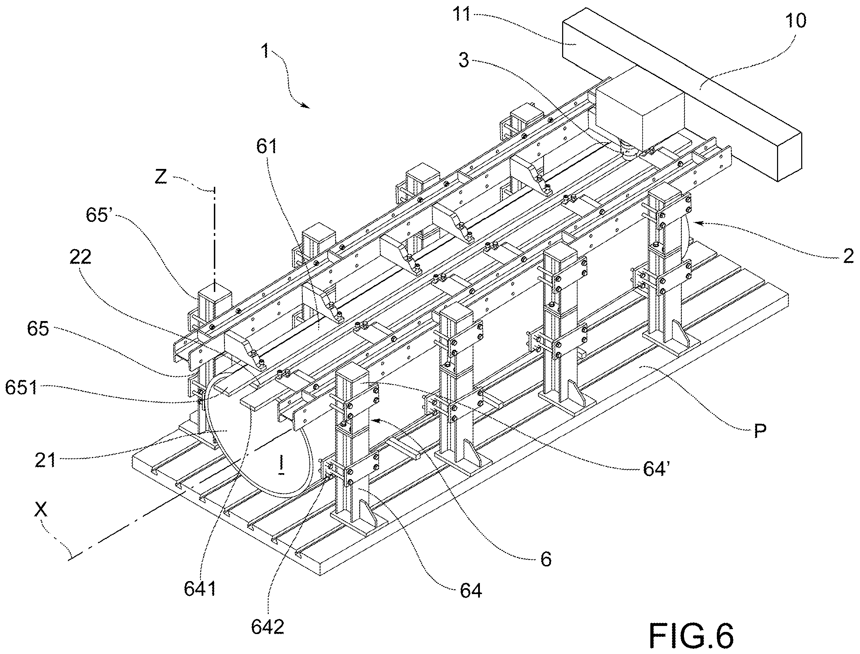

- Figure 6 shows a perspective view of a welding machine according to an embodiment of the present invention;

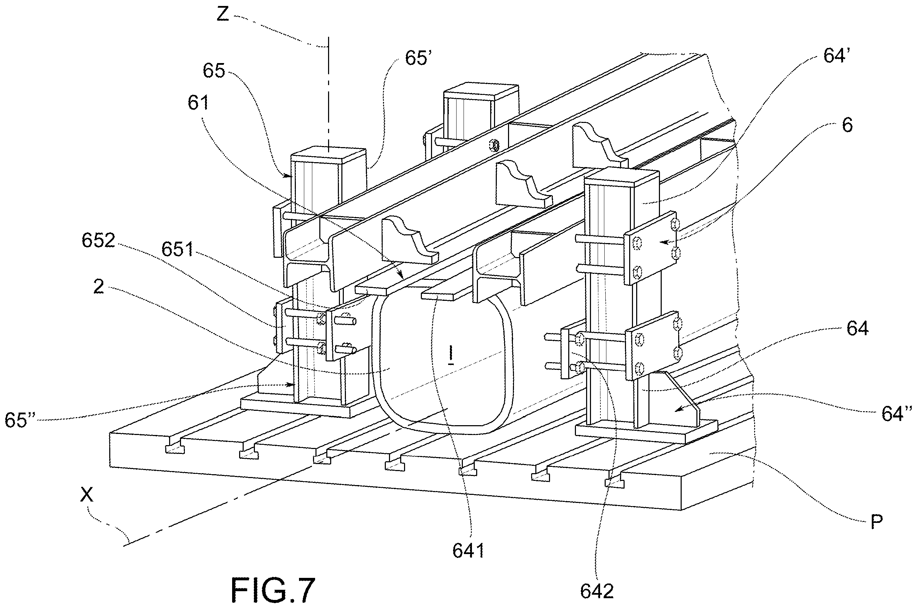

- Figure 7 shows a detail of the welding machine of Figure 6, but in which the mold has a geometry of different section;

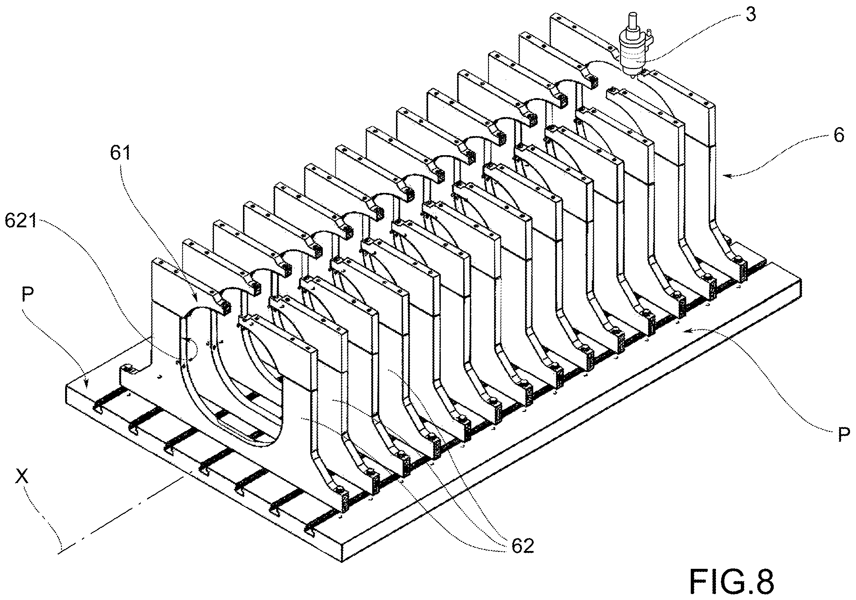

- Figure 8 shows a perspective view of a welding machine according to a further embodiment of the present invention;

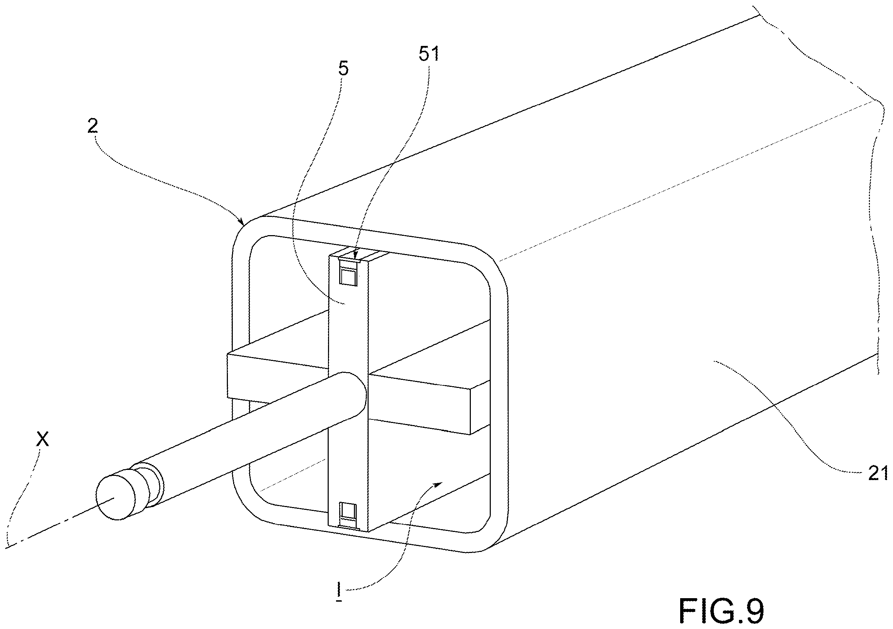

- Figure 9 shows a support structure for a welding machine according to an embodiment of the present invention;

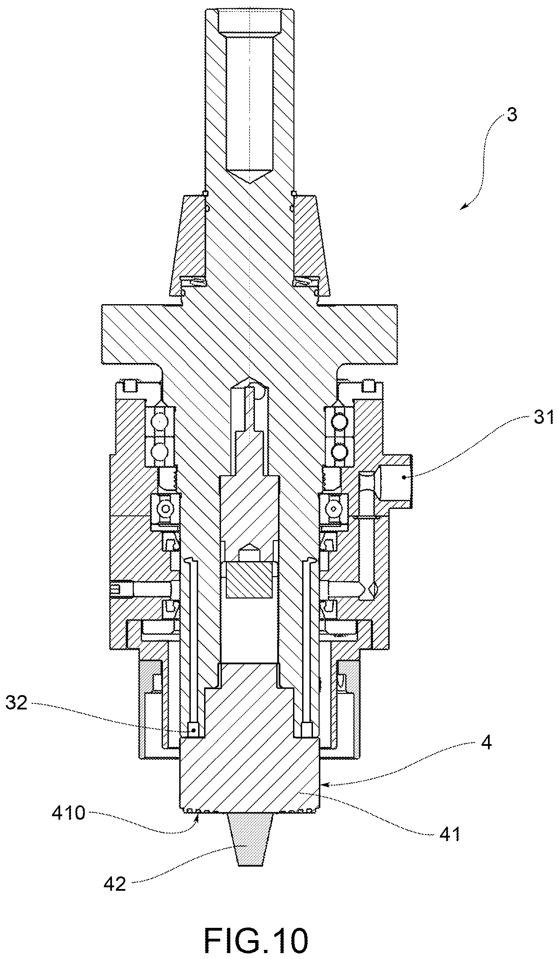

- Figure 10 shows a tool holder head for a welding machine according to an embodiment of the present invention;
- Figure 11 shows a tool for a tool holder head for a welding machine, according to an embodiment of the present invention.

According to the accompanying figures, the reference numeral 1 generally indicates a welding machine 1 for welding one or more sheets 21 via friction stir welding, for example preferably for making an ingot mold 2.

To carry out the welding of a sheet (i.e. of two flaps of the same sheet) or of several sheets together (i.e. of two flaps, each belonging to different sheets), the welding method will be described below.

In particular, for simplicity and clarity of description and without losing generality, a method for making an ingot mold 2 will be described, that is, for welding a metal sheet 21 intended to make an ingot mold. However, it is also clear that the friction stir welding tool, the sheet welding method and the sheet welding machine are intended for welding a metal sheet even if it is not a matter of making an ingot mold, that is also any metal sheet with the exception of a metal sheet for making an ingot mold.

Therefore, in the continuation of the description, metal sheet may be understood as any metal sheet, possibly with the exception of an ingot mold or a metal sheet intended to make an ingot mold.

A general embodiment of the method of welding a sheet 21, i.e. for welding a right flap DX and a left flap SX of a sheet to each other, comprises the following steps (preferably carried out in the order indicated):
a) providing one or more metal material sheets 21 extending along a main extension direction X and so that a left flap SX and a right flap DX of the one or more metal sheets 21 are arranged closer in front of each other, said one or more metal sheets 21 being arranged on a work plane P;
b) providing a tool holder head 3 translatable at least along a direction parallel to the main extension direction X, said tool holder head 3 supporting a friction stir welding tool 4;
c) rotating the tool 4 at the right flap DX and the left flap SX of the metal sheet 21 and proceeding with the welding between the right flap DX and the left flap SX by means of friction stir welding until the complete mutual welding of the flaps is obtained.

With particular reference to the welding of the metal sheet for the construction of the mold, but clearly generalizable to any welding of a sheet 21 for the manufacture of any curved product, or in any case cylindrical or semi-cylindrical or partially cylindrical, the method provides that the steps a), b) and c) described above contemplate in particular:
a) providing the copper sheet 21 wound about a main extension direction in such a way as to enclose an internal cavity I and in such a way that a left SX and a right DX flap of the sheet 21 are arranged close one facing each other; in this step, said sheet 21 is arranged on a work plane P, for example a work plane of a numerically-controlled machine tool;
b) providing a tool holder head 3 translatable at least along a direction parallel to the main extension direction X, which supports a friction stir welding tool 4;
c) rotating the tool 4 at the right flap DX and the left flap SX of the metal sheet 21 and proceeding with the welding between the right flap DX and the left flap SX by means of friction stir welding until an ingot mold 2 is obtained.

If the method is not used for making an ingot mold, it is clear that in step a) it is preferably possible to avoid arranging the copper sheet 21 wound about a main extension direction.

Preferably, before step c), the welding method comprises the step of positioning a support structure 5 inside the internal cavity I. Said support structure 5 comprises a backing surface 51 which counteracts the mechanical pressing force exerted by the tool on the sheet when carrying out step c).

Preferably, the method provides for the step of cooling the tool holder head 3 by means of a cooling liquid during step c).

According to a particularly advantageous variant, during step c), the method provides for dispensing an inert gas, for example argon, on the welding joint being formed between the right flap DX and the left flap SX, around the rotating tool 4, so as to avoid the inclusion of other components in the weld.

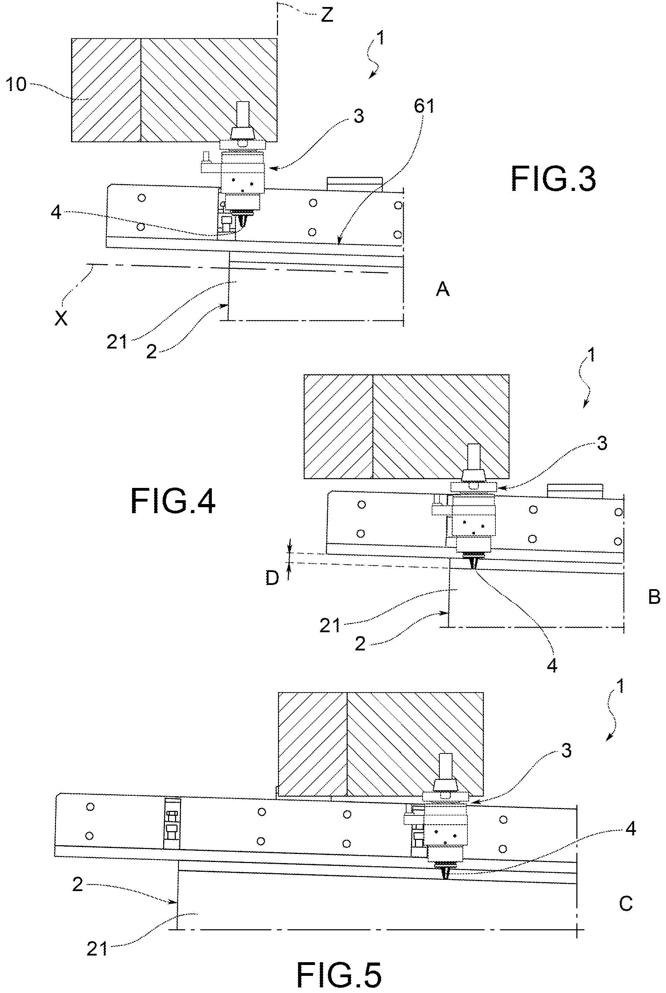

According to a preferred embodiment of the method, step c) comprises the following steps, preferably carried out in the order indicated:
c1) rotating the tool 4 at the right flap DX and the left flap SX of the metal sheet (step A in Figure 3);
c2) proceeding with an initial penetration of the tool 4 into the material of the metal sheet 21 until reaching a predetermined depth D (Figure 4);
c3) detecting a force value generated between the tool 4 and the metal sheet 21 by means of a force sensor arranged in the tool holder head 3;
c4) possibly simultaneously with step c3), detecting a temperature value by means of a temperature sensor positioned on the tool holder head 3;
c5) if the force value detected by the force sensor exceeds a predetermined force threshold and if the temperature value measured by the temperature sensor exceeds a predetermined temperature value, activating the advancement of the tool holder head 3 along the main extension direction X.

Preferably, the predetermined force threshold is any value at least equal to 9000N and the predetermined temperature value is at least equal to 600°C and lower than 700°C and the number of revolutions of the tool 4 is at least equal to 300 rpm.

According to an aspect of the present invention, it is clear that the method described above is also aimed at welding between a right flap DX and a left flap SX of two different sheets placed side by side. That is, in step a), instead of providing a sheet wound so that the two right and left flaps belong to the same sheet, it may also be provided for the presence of a first and a second sheet next to each other so that the right flap DX of the first sheet is approached to the left flap SX of the second sheet.

According to a variant of the method, in which the welding of a right flap DX and a left flap SX of one or more copper sheets with a plate thickness of at least 15 millimeters, preferably 19-22 millimeters, is provided, the method provides for maintaining an average temperature of the sheet around the tool 4 of about 700 °C with an advancement in the main extension direction X of about 28 millimeters per minute and a number of revolutions of the tool 4 of about 350 revolutions per minute. This allows for a defect-free weld.

It is clear that the welding machine 1 is also an object of the present invention, for example for making a weld between sheets, preferably with the exception of making an ingot mold.

According to a variant, the welding machine 1 may possibly also be used for making an ingot mold 2.

The welding machine 1 comprises a tool holder head 3 which supports a friction stir welding tool 4 and a tool holder head movement apparatus 10, for example a numerical control machine with three axes, supporting the tool holder head 3 and comprising at least one translation assembly 11, for example one or more carts, suitable for translating the tool holder head 3 in a controlled manner in a direction parallel to a main extension direction X of the sheet 21 (or of the ingot mold 2) and in a vertical direction Z incident or perpendicular to the main extension direction X.

In accordance with the invention, the tool is made of a Tungsten, Nickel, Molybdenum, iron alloy, in particular a D2M^{®} W-Ni-Mo-Fe alloy.

Preferably, the welding machine 1 comprises a work plane P suitable for supporting the metal sheet 21, preferably with the exception of an ingot mold, during welding and a locking frame 6, releasably fixed to the work plane P. The locking frame 61 comprises an upper frame portion 61 spaced apart from the work plane P in the vertical direction Z. Such upper frame portion 61 is suitable for exerting a pressing force of the metal sheet 21 in the vertical direction P close to a fissure 22 of the metal sheet 21 to be welded.

According to an embodiment, the work plane P is possibly suitable for supporting the ingot mold 2 and the upper frame portion 61 is suitable for exerting a pressing force on the ingot mold 2.

According to an embodiment, the locking frame 6 comprises a plurality of plates 62 mutually spaced apart along the main extension direction X and having a shaped concave surface 621 for housing and keeping the ingot mold 2 in place at least in a direction perpendicular to the main extension direction X.

According to an embodiment variant, the locking frame comprises at least two vertical uprights 64, 65, fixed to the work plane P each on the opposite side with respect to the metal sheet. On each of said vertical uprights 64, 65, in an upper region 64', 65' of the vertical upright, a strip 641, 651 is fixed, which extends mainly in the main extension direction X and which is suitable for exerting a pressing force in the vertical direction Z.

Preferably, the welding machine 1 comprises lower fixing means 642, 652, fixed in a lower region 64", 65" of the upright, closer to the work plane P than the upper region 64', 65'. Spacer elements 7, 7', such as screws, are fixed on such lower fixing means 642, 652, suitable for laterally constraining the metal sheet 21 for preventing it from moving along the transverse direction Y perpendicular to the main extension direction X and to the direction vertical Z.

According to an advantageous embodiment, the welding machine 1 comprises the support structure 5, suitable for being positioned inside the internal cavity I of the metal sheet 21. Said support structure 5 comprises a backing surface 51 which counteracts the mechanical pressing force exerted by the tool 4 on the sheet metal when carrying out the welding.

Preferably, the tool holder head 3 comprises one inner liquid cooling circuit 31 and at least one inner welding gas conveying circuit 32. Such inner welding gas conveying circuit 32 comprises a gas outlet mouth positioned about the tool and suitable for dispensing a gas, preferably an inert gas, so as to ensure an inert atmosphere during the welding to prevent inclusions of other substances in the welding.

According to an aspect of the present invention, the tool 4 is a body made in a single piece comprising a base portion 41 anchorable to the tool holder head 3 and a stem portion 42, extending from the base portion between a base end 42' and a head end 42" mainly along an axial direction K, parallel to or coinciding with the rotation axis 400 of the tool, when in use. The stem portion 42 has a tapered shape towards the head end 42". Preferably, it has a substantially truncated cone shape with the smaller base close to the head end 42".

Furthermore, the stem portion 42 comprises a side surface 420, extending about and along the axial direction K, provided with projections 421 and depressions 422. Preferably, such projections and depressions are the crests and valleys of a thread formed on such side surface 420. In particular, such projections and depressions 421, 422 are shaped to mix and convey the molten metal during the welding operation towards the surface of the metal sheet being welded, that is, along the axial direction K and towards the base portion 41 of the tool 4.

Furthermore, according to an advantageous embodiment, the side surface 42 comprises one or more cuts or interruptions of the tapered shape. Preferably, such cuts or interruptions are flat side faces 423, 423', arranged about the axial direction K and each lying on a secant plane with respect to the axial direction K, i.e., said side faces are inclined so as to converge towards the head end 42".

Preferably, in the truncated cone shape variant of the stem portion 42, the side faces 423, 423' are flat millings of the curvilinear conical side surface 42. Preferably, this variant comprises three side faces 423, 423', 423", arranged about the axial direction K and angularly spaced by 120°.

During the welding operation, i.e. during the rotation of the tool 4 in the sheet metal, the stem portion 42 is subjected to a twisting moment about the axial direction K, such as to induce a slight torsion of the stem portion 42. This causes the side faces 423, 423', during the welding action, to deform to take a curved or twisted or snake-like shape. Such curved or snake-like or twisted shape causes preferential channels for the circulation of the molten metal of the sheet metal being welded, thus favoring the mixing of the metal between the two right DX and left SX flaps of the sheet to be welded, for example the transport of the molten material from the right flap to the left flap or vice versa. This ensures adequate and correct welding of the joint.

Furthermore, the curved or snake-like or twisted shape contributes to conveying the molten metal towards the outermost surface of the metal sheet 21.

According to an embodiment of the invention, the base portion 41 comprises a base surface 410, extending about the stem portion 42, preferably completely about the stem portion 42, on a plane perpendicular to the axial direction K. Such base surface 410 is suitable for coming into contact with the outermost surface of the metal sheet 21 during the welding step. Preferably, one or more grooves 411 or shaped ridges are obtained on said base surface 410 for causing the displacement of the fluid metal material towards the rotation axis 400 of the tool.

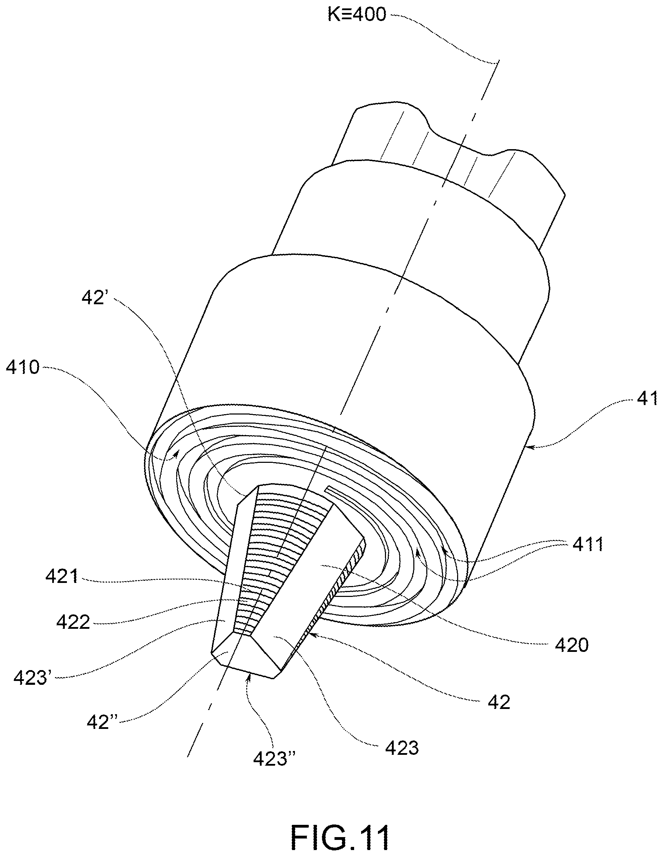

According to a preferred embodiment, the one or more grooves 411 or ridges are shaped like a flat spiral, as shown for example in Figure 11.

According to a preferred embodiment of the invention, the welding step, i.e. for example during step c) or c5) of the method described above, takes place with an inclination of the rotation axis 400 of the tool 4 which is not perpendicular to the tangent plane P' the left flap SX and the right flap DX of the metal sheet 21. In other words, for example, the rotation axis 400 of the tool 4 is not perpendicular to the work plane P, but is inclined with respect to the perpendicular to the work plane P by at least 1°, preferably by at least 2° (for example as shown in Figures 3, 4 and 5). This is true, for example, since the work plane P of the welding machine 1 may be tilted as desired, i.e. the welding machine includes a device for tilting the work plane P. Alternatively or simultaneously, this occurs because the tool holder head movement apparatus 10 is configured to support the tool holder head 3 in such a way that the tool 4 advances along the main extension direction X but with the rotation axis 400 inclined with respect to the perpendicular to the tangent plane P'.

Innovatively, the method for making an ingot mold and the ingot mold welding machine according to the present invention allow the problems encountered in the prior art for manufacturing ingot molds to be brilliantly overcome.

In particular, the method for making an ingot mold according to the present invention is able to reduce the time required for making welds of metal sheets, especially in the case of making ingot molds, requires fewer resources and obtains an improved welding quality compared to welds performed with the prior art techniques.

Advantageously, the manufacturing method according to the present invention does not require preheating the sheet metal for its welding, allowing a considerable saving of time and energy resources.

Furthermore, advantageously, the presence of a releasable locking frame allows metal sheets or ingot molds having different diameters and lengths to be fixed in a stable manner to the work plane, thus ensuring flexibility of use of the welding machine and adequate locking to prevent possible displacements which may affect the quality of the weld.

Furthermore, advantageously, the presence of a support structure suitable for being positioned inside the internal cavity of the sheet/mold, allows counteracting the mechanical force exerted by the tool 4 on the metal sheet when carrying out the welding and ensures an improved weld quality, since the sheet is less subjected to local bending during welding.

According to a further innovative aspect, the tool 4 provided with the stem portion 42 with a tapered shape and provided with projections 421 and depressions 422 for effectively conveying the fluid metal during welding, allows the welding operation to be optimized both from the point of view of the quality of the welding and from the point of view of the efficiency of the entire operation.

It is clear that a person skilled in the art, in order to satisfy contingent and specific needs, could make modifications to the invention described above, said modifications being all contained within the scope of protection as defined in the following claims.

## Claims

1. A friction stir welding tool (4) for welding a right flap (DX) and a left flap (SX) of a metal sheet (21) or of two or more metal sheets, said tool (4) comprising a body made in a single piece comprising a base portion (41) anchorable to a tool holder head (3) for a welding machine (1), and a stem portion (42), extending from the base portion between a base end (42') and a head end (42") mainly along an axial direction (K), which is parallel to, or coinciding with, a rotation axis (400) of the tool, when in use,
wherein the stem portion (42) has a tapered shape towards the head end (42") and comprises a side surface (420), extending about and along the axial direction (K), provided with projections (421) and depressions (422) shaped to mix and convey the molten metal during the welding operation towards a surface of the metal sheet (21) being welded, i.e., along the axial direction (K) and towards the base portion (41) of the tool (4),
**characterized in that** the tool (4) is made of a tungsten, nickel, molybdenum, iron alloy.

2. Tool (4) according to claim 1, wherein the stem portion (42) has a substantially truncated cone shape with the smaller base close to the head end (42").

3. Tool (4) according to claim 1 or 2, wherein the side surface (42) comprises one or more cuts or interruptions of the tapered shape.

4. Tool (4) according to claim 3, wherein the cuts or interruptions are flat side faces (423, 423'), arranged about the axial direction (K) and each lying on a secant plane with respect to the axial direction (K), i.e., said side faces are inclined so as to converge towards the head end (42").

5. Tool (4) according to any one of claims 2 and 4, wherein the side faces (423, 423') are flat millings of the curvilinear conical side surface (42), so that during the rotation of the tool (4) in the metal sheet (21), the stem portion (42), being subjected to a torque about the axial direction (K), causes a deformation of the side faces (423, 423'), so as to take a curved or twisted or snake-like shape suitable for forming preferential circulation channels of the molten metal of the metal sheet.

6. Tool (4) according to claim 5, wherein the side faces (423, 423') comprise three side faces (423, 423', 423") arranged about the axial direction (K) and mutually angularly spaced apart by 120°.

7. Tool (4) according to any one of the preceding claims, wherein the base portion (41) comprises a base surface (410), which extends about the stem portion (42), preferably completely about the stem portion (42), on a plane perpendicular to the axial direction (K),
and wherein said base surface (410) is suitable for coming into contact with the outermost surface of the metal sheet (21) during the welding step,
and wherein one or more grooves (411) or shaped ridges are obtained on said base surface (410) for causing the displacement of the fluid metal material towards the rotation axis (400) of the tool.

8. Tool (4) according to claim 7, wherein the one or more grooves (411) or ridges are flat spiral-shaped.

9. A method of welding a metal sheet (21), for welding a right flap (DX) and a left flap (SX) of a metal sheet therebetween, said method comprising the steps of:
a) providing one or more metal material sheets (21) extending along a main extension direction (X) and so that a left flap (SX) and a right flap (DX) of the one or more metal sheets (21) are arranged closer in front of each other, said one or more metal sheets (21) being arranged on a work plane (P);
b) providing a tool holder head (3) translatable at least along a direction parallel to the main extension direction (X), said tool holder head (3) supporting a friction stir welding tool (4) according to any one of claims 1 to 8;
c) rotating the tool (4) at the right flap (DX) and the left flap (SX) of the metal sheet (21) and proceeding with the welding between the right flap (DX) and the left flap (SX) by means of friction stir welding until the complete mutual welding of the flaps is obtained.

10. Method according to claim 9, wherein, before step c), the method comprises the step of positioning a support structure (5) beneath the right flap (DX) and the left flap (SX), said support structure (5) comprising a backing surface (51) which counteracts the mechanical pressing force exerted by the tool on the metal sheet (21) when carrying out step c).

11. Method according to any one of claims 9 to 10, comprising the step of cooling the tool holder head (3) by means of a cooling liquid during step c).

12. Method according to any one of claims 9 to 11, wherein, during step c), the method includes dispensing an inert gas, such as argon, on the welding joint being formed between the right flap (DX) and the left flap (SX), around the rotating tool (4).

13. Method according to any one of claims 9 to 12, wherein said step b) comprises the following steps:
c1) rotating the tool (4) at the right flap (DX) and the left flap (SX) of the metal sheet;
c2) proceeding with an initial penetration of the tool (4) into the material of the metal sheet (21) until reaching a predetermined depth (D);
c3) detecting a force value generated between the tool (4) and the metal sheet (21) by means of a force sensor arranged in the tool holder head (3);
c4) detecting a temperature value by means of a temperature sensor positioned on the tool holder head (3);
c5) if the force value detected by the force sensor exceeds a predetermined force threshold and if the temperature value measured by the temperature sensor exceeds a predetermined temperature value, activating the advancement of the tool holder head along the main extension direction (X).

14. Method according to claim 13, wherein the predetermined force threshold is any value at least equal to 9000N and wherein the predetermined temperature value is at least equal to 600°C and lower than 700°C and wherein the number of revolutions of the tool (4) is at least equal to 300 rpm.

15. A welding machine (1) for welding one or more metal sheets (21) for friction stir welding according to the method according to any one of claims 9 to 14, said welding machine (1) comprising:
- a tool holder head (3) supporting a tool (4) for friction stir welding in accordance with any of claims 1-8;
- a tool holder head movement apparatus (10), for example a numerical control machine with three axes, supporting the tool holder head (3) and comprising at least one translation assembly (11), for example one or more carts, suitable for translating the tool holder head (3) in a controlled manner in a direction parallel to a main extension direction (X) of the metal sheet (21) and in a vertical direction (Z) incident or perpendicular to the main extension direction (X).

16. Welding machine (1) according to claim 15, comprising a work plane (P) suitable for supporting the metal sheet (21) during the welding, and a locking frame (6) releasably fixed to the work plane (P) and comprising an upper frame portion (61) spaced apart from the work plane (P) in the vertical direction (Z) and suitable for exerting a pressing force on the metal sheet (21) in the vertical direction (Z) close to a fissure (22) in the metal sheet (21) to be welded.

17. Welding machine (1) according to claim 16, wherein the locking frame (6) comprises a plurality of plates (62) mutually spaced apart along the main extension direction (X) and having a shaped concave surface (621) for housing and keeping the metal sheet (21) in place at least in a direction perpendicular to the main extension direction (X).

18. Welding machine (1) according to any one of claims 15 to 17, comprising a support structure (5), suitable for being positioned beneath the right (DX) or left (SX) flap, said support structure (5) comprising a backing surface (51) which counteracts the mechanical pressing force exerted by the tool (4) on the metal sheet when carrying out the welding.

19. Welding machine (1) according to any one of claims 15 to 18, wherein the tool holder head (3) comprises one inner liquid cooling circuit and at least one inner welding gas conveying circuit, said inner welding gas conveying circuit comprising a gas outlet mouth positioned about the tool and suitable for dispensing a gas, preferably an inert gas, so as to ensure an inert atmosphere during the welding to prevent inclusions of other substances in the welding.

## Patentansprüche

1. Reibrührschweißwerkzeug (4) zum Schweißen einer rechten Klappe bzw.
Lasche (DX) und einer linken Klappe bzw. Lasche (SX) eines Metallblechs (21) oder zweier oder mehrerer Metallbleche, wobei das Werkzeug (4) einen einstückig hergestellten Körper umfasst, der einen Basisabschnitt (41), der an einem Werkzeughalterkopf (3) für eine Schweißmaschine (1) verankerbar ist, und einen Schaftabschnitt (42) umfasst, der sich von dem Basisabschnitt zwischen einem Basisende (42') und einem Kopfende (42") hauptsächlich entlang einer Axialrichtung (K) erstreckt, die in Gebrauch parallel zu über übereinstimmend mit einer Drehachse (400) des Werkzeugs ist,
wobei der Schaftabschnitt (42) eine verjüngte Form zu dem Kopfende (42") hin aufweist und eine Seitenoberfläche (420) umfasst, die sich um und entlang der Axialrichtung (K) erstreckt, und zwar versehen mit Vorsprüngen (421) und Vertiefungen (422), die so geformt sind, dass sie das geschmolzene Metall während des Schweißvorgangs mischen und zu einer Oberfläche des Metallblechs (21) befördern, das geschweißt wird, d. h. entlang der Axialrichtung (K) und zu dem Basisabschnitt (41) des Werkzeugs (4),
**dadurch gekennzeichnet, dass** das Werkzeug (4) aus einer Wolfram-Nickel-Molybdän-Eisen-Legierung hergestellt ist.

2. Werkzeug (4) nach Anspruch 1, wobei der Schaftabschnitt (42) im Wesentlichen eine Kegelstumpfform aufweist, wobei die kleinere Basis nahe dem Kopfende (42") ist.

3. Werkzeug (4) nach Anspruch 1 oder 2, wobei die Seitenoberfläche (42) einen oder mehrere Schnitte oder Unterbrechungen der verjüngten Form umfasst.

4. Werkzeug (4) nach Anspruch 3, wobei die Schnitte oder Unterbrechungen flache Seitenflächen (423, 423') sind, die um die Axialrichtung (K) angeordnet sind und jeweils auf einer Sekantenebene in Bezug auf die Axialrichtung (K) liegen, d. h. die Seitenflächen sind so geneigt, dass sie zu dem Kopfende (42") hin konvergieren.

5. Werkzeug (4) nach einem der Ansprüche 2 und 4, wobei die Seitenflächen (423, 423') flache Fräsungen der kurvenförmigen bzw. krummlinigen konischen Seitenfläche (42) sind, so dass während der Drehung des Werkzeugs (4) in dem Metallblech (21) der Schaftabschnitt (42), der einem Drehmoment um die Axialrichtung (K) ausgesetzt ist, eine Verformung der Seitenflächen (423, 423') dahingehend bewirkt, eine gekrümmte oder verdrehte oder schlangenartige Form anzunehmen, die geeignet ist, bevorzugte Zirkulationskanäle des geschmolzenen Metalls des Metallblechs zu bilden.

6. Werkzeug (4) nach Anspruch 5, wobei die Seitenflächen (423, 423') drei Seitenflächen (423, 423', 423") umfassen, die um die Axialrichtung (K) angeordnet und um 120° zueinander winkelig beabstandet sind.

7. Werkzeug (4) nach einem der vorhergehenden Ansprüche, wobei der Basisabschnitt (41) eine Basisoberfläche (410) umfasst, die sich um den Schaftabschnitt (42), vorzugsweise vollständig um diesen herum, in einer Ebene senkrecht zur Axialrichtung (K), erstreckt,
und wobei diese Basisoberfläche (410) geeignet ist, mit der äußersten Oberfläche des Metallblechs (21) während des Schweißschritts in Kontakt zu kommen,
und wobei eine oder mehrere Nuten (411) oder geformte Rippen an dieser Basisoberfläche (410) erhalten bzw. vorhanden sind, um die Verlagerung des flüssigen Metallmaterials zu der Drehachse (400) des Werkzeugs hin zu bewirken.

8. Werkzeug (4) nach Anspruch 7, wobei die eine oder mehreren Nuten (411) oder Rippen flach spiralförmig sind.

9. Verfahren zum Schweißen eines Metallblechs (21) zum Schweißen einer rechten Klappe bzw. Lasche (DX) und einer linken Klappe bzw. Lasche (SX) eines Metallblechs (21) dazwischen, wobei das Verfahren die Schritte umfasst:
a) Bereitstellen eines oder mehrerer Metallmaterialbleche (21), die sich entlang einer Haupterstreckungsrichtung (X) erstrecken, und so, dass eine linke Klappe bzw. Lasche (SX) und eine rechte Klappe bzw. Lasche (DX) des einen oder der mehreren Metallbleche (21) näher voreinander angeordnet sind, wobei das eine oder die mehreren Metallbleche (21) auf einer Arbeitsebene (P) angeordnet werden;
b) Bereitstellen eines Werkzeughalterkopfes (3), der zumindest entlang einer Richtung parallel zu der Haupterstreckungsrichtung (X) verschiebbar ist, wobei der Werkzeughalterkopf (3) ein Reibrührschweißwerkzeug (4) nach einem der Ansprüche 1 bis 8 trägt;
c) Drehen des Werkzeugs (4) an der rechten Lasche (DX) und der linken Lasche (SX) des Metallblechs (21) und Fortsetzen des Schweißens zwischen der rechten Lasche (DX) und der linken Lasche (SX) mittels Reibrührschweißen, bis die vollständige Zusammenschweißung der Laschen erhalten wird.

10. Verfahren nach Anspruch 9, wobei vor Schritt c) das Verfahren den Schritt eines Positionierens einer Trägerstruktur (5) unterhalb der rechten Lasche (DX) und der linken Lasche (SX) umfasst, wobei die Trägerstruktur (5) eine Stützoberfläche (51) umfasst, die der mechanischen Presskraft entgegenwirkt, die durch das Werkzeug auf das Metallblech (21) beim Durchführen von Schritt c) ausgeübt wird.

11. Verfahren nach einem der Ansprüche 9 bis 10, umfassend den Schritt eines Kühlens des Werkzeughalterkopfes (3) mittels einer Kühlflüssigkeit während Schritt c).

12. Verfahren nach einem der Ansprüche 9 bis 11, wobei das Verfahren während des Schrittes c) ein Ausgeben eines Inertgases, wie Argon, auf die Schweißverbindung beinhaltet, die zwischen der rechten Lasche (DX) und der linken Lasche (SX) um das rotierende Werkzeug (4) herum gebildet wird.

13. Verfahren nach einem der Ansprüche 9 bis 12, wobei der Schritt b) die folgenden Schritte umfasst:
c1) Drehen des Werkzeugs (4) an der rechten Lasche (DX) und der linken Lasche (SX) des Metallblechs;
c2) Fortfahren mit einem anfänglichen Eindringen des Werkzeugs (4) in das Material des Metallblechs (21), bis eine vorbestimmte Tiefe (D) erreicht ist;
c3) Erfassen eines Kraftwerts, der zwischen dem Werkzeug (4) und dem Metallblech (21) erzeugt wird, mittels eines Kraftsensors, der in dem Werkzeughalterkopf (3) angeordnet ist;
c4) Erfassen eines Temperaturwerts mittels eines Temperatursensors, der an dem Werkzeughalterkopf (3) positioniert ist;
c5) falls der von dem Kraftsensor erfasste Kraftwert einen vorbestimmten Kraftschwellenwert überschreitet und falls der von dem Temperatursensor gemessene Temperaturwert einen vorbestimmten Temperaturwert überschreitet, Aktivieren des Vorschubs des Werkzeughalterkopfs entlang der Haupterstreckungsrichtung (X).

14. Verfahren nach Anspruch 13, wobei der vorbestimmte Kraftschwellenwert ein beliebiger Wert von zumindest gleich 9000 N ist und wobei der vorbestimmte Temperaturwert zumindest gleich 600°C und weniger als 700°C ist und wobei die Anzahl von Umdrehungen bzw. Drehzahl des Werkzeugs (4) zumindest gleich 300 rpm ist.

15. Schweißmaschine (1) zum Schweißen eines oder mehrerer Metallbleche (21) zum Reibrührschweißen nach dem Verfahren nach einem der Ansprüche 9 bis 14, wobei die Schweißmaschine (1) umfasst:
- einen Werkzeughalterkopf (3), der ein Werkzeug (4) zum Reibrührschweißen nach einem der Ansprüche 1-8 trägt;
- eine Werkzeughalterkopf-Bewegungsvorrichtung (10), beispielsweise eine numerisch gesteuerte Maschine bzw. CNC-Maschine mit drei Achsen, die den Werkzeughalterkopf (3) trägt und zumindest eine Verschiebungsanordnung (11), beispielsweise einen oder mehrere Schlitten, umfasst, die zum Verschieben des Werkzeughalterkopfs (3) auf gesteuerte bzw. kontrollierte Weise in eine Richtung parallel zu einer Haupterstreckungsrichtung (X) des Metallblechs (21) und in einer vertikalen Richtung (Z) auffallend auf oder senkrecht zu der Haupterstreckungsrichtung (X) geeignet ist.

16. Schweißmaschine (1) nach Anspruch 15, umfassend eine Arbeitsebene (P), die geeignet ist, das Metallblech (21) während des Schweißens zu tragen, und einen Verriegelungsrahmen (6), der lösbar an der Arbeitsebene (P) fixiert bzw. befestigt ist und einen oberen Rahmenabschnitt (61) umfasst, der von der Arbeitsebene (P) in der vertikalen Richtung (Z) beabstandet und geeignet ist, eine Presskraft auf das Metallblech (21) in der vertikalen Richtung (Z) in der Nähe eines Risses (22) in dem zu schweißenden Metallblech (21) auszuüben.

17. Schweißmaschine (1) nach Anspruch 16, wobei der Verriegelungsrahmen (6) eine Mehrzahl von Platten (62) umfasst, die entlang der Haupterstreckungsrichtung (X) voneinander beabstandet sind und eine geformte konkave Oberfläche (621) aufweisen, um das Metallblech (21) aufzunehmen und an Ort und Stelle zu halten, und zwar zumindest in einer Richtung senkrecht zu der Haupterstreckungsrichtung (X).

18. Schweißmaschine (1) nach einem der Ansprüche 15 bis 17, umfassend eine Trägerstruktur (5), die geeignet ist, unterhalb der rechten (DX) oder linken (SX) Lasche positioniert zu werden, wobei die Trägerstruktur (5) eine Stützoberfläche (51) umfasst, die der mechanischen Presskraft entgegenwirkt, die durch das Werkzeug (4) auf das Metallblech beim Durchführen des Schweißens ausgeübt wird.

19. Schweißmaschine (1) nach einem der Ansprüche 15 bis 18, wobei der Werkzeughalterkopf (3) einen inneren Flüssigkeitskühlkreislauf und zumindest einen inneren Schweißgasförderkreislauf umfasst, wobei der innere Schweißgasförderkreislauf eine Gasauslassöffnung umfasst, die um das Werkzeug herum positioniert und geeignet ist, ein Gas, vorzugsweise ein Inertgas, abzugeben, um während des Schweißens eine inerte Atmosphäre sicherzustellen, um Einschlüsse anderer Substanzen beim Schweißen bzw. in der Schweißung zu verhindern.

## Revendications

1. Outil de soudage par friction-malaxage (4) pour souder un volet droit (DX) et un volet gauche (SX) d'une tôle (21) ou de deux ou de davantage de tôles, ledit outil (4) comprenant un corps fait en une seule pièce comportant une partie de base (41) pouvant être ancrée dans une tête porte-outil (3) pour une machine de soudage (1) et une partie de tige (42) s'étendant à partir de la partie de base entre une extrémité de base (42') et une extrémité de tête (42") essentiellement dans une direction axiale (K) qui, lors de l'utilisation, est parallèle à ou coïncide avec un axe de rotation (400) de l'outil,
dans lequel la partie de tige (42) a une forme conique vers l'extrémité de tête (42") et comprend une surface latérale (420) s'étendant autour et le long de la direction axiale (K), pourvue de saillies (421) et de creux (422) ayant des formes pour mélanger et transporter le métal fondu pendant l'opération de soudage vers une surface de la tôle (21) à souder, c'est-à-dire le long de la direction axiale (K) et vers la partie de base (41) de l'outil (4),
**caractérisé en ce que** l'outil (4) est fait en un alliage de tungstène, nickel, molybdène, fer.

2. Outil (4) selon la revendication 1, dans lequel la partie de tige (42) a une forme sensiblement conique tronquée avec la base plus petite vers l'extrémité de tête (42").

3. Outil (4) selon la revendication 1 ou 2, dans lequel la surface latérale (42) comprend une ou plusieurs entailles ou interruptions de la forme conique.

4. Outil (4) selon la revendication 3, dans lequel les entailles et interruptions sont des faces latérales plates (423, 423') agencées autour de la direction axiale (K) et chacune étant située sur un plan sécant par rapport à la direction axiale (K), c'est-à-dire que lesdites faces latérales sont inclinées de façon à converger vers l'extrémité de tête (42").

5. Outil (4) selon l'une des revendications 2 et 4, dans lequel les faces latérales (423, 423') sont des fraisages plats de la surface latérale conique curviligne (42), si bien que, pendant la rotation de l'outil (4) dans la tôle (21), la partie de tige (42), soumise à un couple autour de la direction axiale (K), cause une déformation des faces latérales (423, 423') de façon à prendre une forme courbée ou torsadée ou de serpent adaptée pour former des canaux de circulation préférentielle du métal fondu de la tôle.

6. Outil (4) selon la revendication 5, dans lequel les faces latérales (423, 423') comprennent trois faces latérales (423, 423', 423") agencées autour de la direction axiale (K) et angulairement espacées les unes des autres de 120°.

7. Outil (4) selon l'une des revendications précédentes, dans lequel la partie de base (41) comprend une surface de base (410) qui s'étend autour de la partie de tige (42), de préférence complètement autour de la partie de tige (42), dans un plan perpendiculaire à la direction axiale (K),
et dans lequel ladite surface de base (410) est adaptée pour venir en contact avec la surface la plus à l'extérieur de la tôle pendant l'étape de soudage,
et dans lequel un ou plusieurs sillons (411) ou crêtes formées sont obtenu(e)s sur ladite surface de base (410) pour causer le déplacement de matériau métallique fluide vers l'axe de rotation (400) de l'outil.

8. Outil (4) selon la revendication 7, dans lequel lesdit(e)s un(e) ou plusieurs sillons ou crêtes ont une forme spiralée plate.

9. Procédé de soudage d'une tôle (21) pour souder un volet droit (DX) et un volet gauche (SX) d'une tôle (21) ensemble, ledit procédé comprenant les étapes de :
a) pourvoir une ou plusieurs tôles de matériau métallique (21) s'étendant le long d'une direction d'extension principale (X) et de façon qu'un volet gauche (SX) et un volet droit DX) de ladite une ou plusieurs tôles (21) soient agencés plus proches l'un devant l'autre, lesdites une ou plusieurs tôles (21) étant agencées en regard l'un de l'autre sur un plan de travail (P) ;
b) pourvoir une tête porte-outil (3) pouvant être déplacée au moins le long d'une direction parallèle à la direction d'extension principale (X), ladite tête porte-outil (3) supportant un outil de soudage par friction-malaxage (4) selon l'une quelconque des revendications 1 à 8 ;
c) faire tourner l'outil (4) au volet droit (DX) et au volet gauche (SX) de la tôle (21) et effectuer le soudage entre le volet droit (DX) et le volet gauche (SX) par soudage par friction-malaxage jusqu'à ce qu'un soudage complet entre les volets soit obtenu.

10. Procédé selon la revendication 9, dans lequel le procédé comprend avant l'étape c) l'étape de positionner une structure de support (5) en-dessous du volet droit (DX) et du volet gauche (SX), ladite structure de support (5) comprenant une surface de d'appui (51) qui contrecarre la force de pression mécanique exercée par l'outil sur la tôle (21) lors de la mise en œuvre de l'étape c).

11. Procédé selon l'une quelconque des revendications 1 à 10, comprenant l'étape de refroidir la tête porte-outil (3) pendant l'étape c) moyennant un liquide de refroidissement.

12. Procédé selon l'une quelconque des revendications 9 à 11, dans lequel, pendant l'étape c), le procédé comprend la distribution d'un gaz inerte tel que de l'argon sur le joint de soudure en cours de formation entre le volet droit (DX) et le volet gauche (SX) autour de l'outil (4) en rotation.

13. Procédé selon l'une quelconque des revendications 9 à 12, dans lequel l'étape b) comprend les étapes suivantes :
c1) faire tourner l'outil (4) au volet droit (DX) et au volet gauche (SX) de la tôle ;
c2) effectuer une pénétration initiale de l'outil (4) dans le matériau de la tôle (21) jusqu'à atteindre une profondeur (D) prédéterminée ;
c3) détecter une valeur de force engendrée entre l'outil (4) et la tôle (21) moyennant un capteur de force agencé dans la tête porte-outil (3) ;
c4) détecter une valeur de température moyennant un capteur de température positionné sur la tête porte-outil (3) ;
c5) si la valeur de force détectée par le capteur de force dépasse un seuil de force prédéterminé et si la valeur de température mesurée par le capteur de température dépasse une valeur de température prédéterminée, activer l'avancement de la tête porte-outil le long de la direction d'extension principale (X).

14. Procédé selon la revendication 13, dans lequel le seuil de force prédéterminé est toute valeur au moins égale à 9000 N et dans lequel la valeur de température prédéterminée est au moins égale à 600 °C et inférieure à 700 °C et dans lequel le nombre de tours de l'outil (4) est au moins égal à 300 t/min.

15. Machine de soudage (1) pour souder une ou plusieurs tôles (21) par soudage par friction-malaxage selon le procédé selon l'une quelconque des revendications 9 à 14, ladite machine de soudage (1) comprenant :
- une tête porte-outil (3) portant un outil (4) pour soudage par friction-malaxage selon l'une quelconque des revendications 1 à 8 ;
- un appareil de mouvement de la tête porte-outil, par exemple une machine de commande numérique avec trois axes, portant la tête porte-outil (3) et comprenant au moins un ensemble de translation (11), par exemple un ou plusieurs chariots, adaptés pour déplacer la tête porte-outil (3) de façon commandée dans une direction parallèle à une direction d'extension principale (X) de la tôle (21) et dans une direction verticale (Z) incidente ou perpendiculaire à la direction d'extension principale (X).

16. Machine de soudage (1) selon la revendication 15, comprenant un plan de travail (P) adapté pour porter la tôle (21) pendant le soudage et un cadre de fixation (6) monté de façon amovible sur le plan de travail (P) et comprenant une partie de cadre supérieure (61) éloignée du plan de travail (P) dans la direction verticale (Z) et adaptée pour exercer une force de pression sur la tôle (21) dans la direction verticale (Z) proche d'une fissure (22) dans la tôle (21) à souder.

17. Machine de soudage selon la revendication 16, dans laquelle le cadre de fixation (6) comprend une pluralité de plaques (62) espacées les unes des autres le long de la direction d'extension principale (X) et ayant une surface (621) de forme concave pour loger et garde la tôle (21) en place au moins dans une direction perpendiculaire à la direction d'extension principale (X).

18. Machine de soudage (1) selon l'une quelconque des revendications 15 à 17, comprenant une structure de support (5) adaptée pour être positionnée en-dessous du volet droit (DX) ou gauche (SX), laquelle structure de support (5) comprenant une surface d'appui (51) qui contre la force de pression mécanique exercée par l'outil (4) sur la tôle lorsque le soudage est effectué.

19. Machine de soudage (1) selon l'une quelconque des revendications 15 à 18, dans laquelle la tête porte-outil (3) comprend un circuit intérieur de refroidissement à liquide et au moins un circuit intérieur de transport de gaz à souder, ledit circuit intérieur de transport de gaz à souder comprenant une ouverture de sortie de gaz positionnée vers l'outil et adaptée pour délivrer un gaz, de préférence un gaz inerte, afin d'assurer une atmosphère inerte pendant le soudage pour éviter des inclusions d'autres substances dans la soudure.
